**Europäisches Patentamt**

**European Patent Office**

**Office européen des brevets**

(19)

(11) Numéro de publication : **0 110 927**
**B1**

(12) **FASCICULE DE BREVET EUROPÉEN**

(45) Date de publication du fascicule du brevet :
27.05.87

(51) Int. Cl.⁴ : **G 06 F 15/20**

(21) Numéro de dépôt : **83901717.5**

(22) Date de dépôt : **02.06.83**

(86) Numéro de dépôt international :
**PCT/FR 83/00107**

(87) Numéro de publication internationale :
**WO/8304325 (08.12.83 Gazette 83/28)**

(54) PROCEDE ET DISPOSITIF D'ANALYSE D'EFFLUENTS POUR DETECTION DE PICS.

(30) Priorité : 03.06.82 FR 8209675

(43) Date de publication de la demande :
20.06.84 Bulletin 84/25

(45) Mention de la délivrance du brevet :
27.05.87 Bulletin 87/22

(84) Etats contractants désignés :
AT BE CH DE GB LI LU NL SE

(56) Documents cités :
FR-A- 1 339 510
Analytical Chemistry, vol. 42, no. 4, April 1970, Columbus, Ohio, US, A.H. Anderson et al., "Computer analysis of unresolved non-gaussian gas chromatograms by curve-fitting", pages 434-440
Journal of chromatographic science, vol. 8, January 1970, Niles (US), M.F. Burke et al.: "Use of a dedicated computer for real-time control of gas chromatographic measurements", pages 39-45

(73) Titulaire : **GILSON MEDICAL ELECTRONICS (FRANCE)**
72 rue Gambetta
F-95400 Villiers Le Bel (FR)

(72) Inventeur : **BONNEYRAT, Alain Maurice Emile**
25, rue Gabriel Péri
F-95270 Saint Martin du Tertre (FR)
Inventeur : **LANGLAIS, Christian Léon Auguste**
2, rue André Nouet
F-95330 Domont (FR)

(74) Mandataire : **Martin, Jean-Jacques et al**
Cabinet REGIMBEAU 26, Avenue Kléber
F-75116 Paris (FR)

## Description

L'invention concerne l'analyse d'effluents, et s'applique, en particulier mais non exclusivement, à la chromatographie en phase liquide.

Dans ce domaine particulier, on fait passer sur une colonne de chromatographie un éluent et un échantillon à analyser. L'éluent entraîne sélectivement dans la colonne divers constituants de l'échantillon.

En sortie de colonne, l'effluent fait l'objet d'une détection d'une propriété physique et/ou chimique, qui permet de repérer le passage de constituants intéressants de l'échantillon. Cette détection s'effectue en fonction du temps, et fournit un signal électrique analogique.

Ce signal électrique peut être considéré comme comportant une « ligne de base », assortie de pics dont certains correspondent à des constituants intéressants de l'échantillon (pics utiles). Les autres pics représentent des artefacts.

Toute détection de pic utile est généralement assortie d'un prélèvement concomitant et sélectif de l'effluent, à l'aide d'un appareil dénommé collecteur de fractions.

Il est souhaitable d'effectuer une détection automatique des pics utiles. Diverses techniques ont été proposées à cet effet.

La plus simple consiste à définir une valeur de seuil constante, un peu au-dessus de la ligne de base. Ce procédé, qui convient bien pour certaines applications, n'est pas parfaitement satisfaisant en général : dans les cas difficiles, il faut régler le seuil très bas, ce qui conduit à faire des prélèvements inutiles, en nombre excessif.

Il a également été proposé de tenir compte de la pente du signal détecté, pour y repérer les débuts et fins de pics, ainsi que les minima entre deux pics proches. Là encore, cette technique ne donne pas entière satisfaction.

En effet, il arrive, notamment en chromatographie avec éluent multi-composants et gradient de concentration de l'éluent, que le niveau de la ligne de base évolue assez rapidement, ce qui met en défaut les techniques de détection de pics indiquées ci-dessus.

Le document FR-A-1 339 510 concerne un procédé de traitement de signaux électriques issus d'appareils d'analyse par exemple de chromatographes. Ce procédé de traitement a pour but essentiel de distinguer des pics d'une évolution de la ligne de base pour corriger automatiquement la dérive de la ligne de base.

Pour cela, le document FR-A-1 339 510 propose différentes variantes permettant de détecter la pente du signal et de déceler un pic lorsque la pente du signal est supérieure à une évolution normale de la ligne de base.

Selon l'une de ces variantes, on détecte le franchissement d'un écart critère n pendant un temps dT par le signal. Si pendant ce temps dT le signal n'atteint pas l'écart critère n, l'évolution du signal correspond à une simple dérive de la ligne de base permettant ainsi de corriger cette dérive.

Par contre, le dépassement de l'écart critère n pendant le temps dT est interprété comme étant dû à l'arrivée d'un pic.

Selon une autre variante encore de ce document FR, l'observation de la pente permet également de discerner deux pics voisins par la détection d'un minimum entre les deux pics.

Ce processus cependant ne permet pas de discerner aisément tous les pics utiles.

La présente invention vient apporter une solution à ces problèmes.

L'invention telle que revendiquée propose un procédé d'analyse d'effluents, dans lequel :

a) on détecte en fonction du temps, sous forme de signal électrique, une propriété physique et/ou chimique de l'effluent, le signal électrique détecté comportant une ligne de base assortie de pics dont certains sont représentatifs d'informations utiles concernant l'effluent ;

b) on analyse le signal détecté, en particulier d'après sa pente, en vue d'y sélectionner des pics utiles.

L'étape d'analyse b) comprend les opérations suivantes :

b1) définir une valeur d'écart (LØ), un seuil de pente (SØ) et un temps TMAX correspondant à la durée du pic le plus large à déceler,

b2) comparer la pente du signal détecté, à la valeur de seuil (SØ) ;

b3) faire évoluer un signal pilote à partir d'une valeur égale au signal détecté, augmentée de la valeur d'écart (LØ), tant que la pente du signal détecté est inférieure au seuil de pente

b4) limiter l'évolution du signal pilote lorsque la pente du signal détecté est supérieure au seuil de pente ;

b5) retenir comme un pic utile les valeurs consécutives du signal détecté qui dépassent le niveau du signal pilote ; et

b6) après la détection d'un début de pic à l'étape b5) :

b6.1) déceler le passage du signal détecté en dessous du signal pilote ce qui correspond à la fin d'un pic utile et conduit à réitérer les étapes b2 à b6 ou déceler le passage du signal détecté par un minimum, ce qui correspond à la fin du pic détecté et au début du pic suivant et conduit à réitérer les étapes b5 et b6 et simultanément,

b6.2) comparer le temps écoulé depuis le début d'un pic au temps TMAX pour redéfinir un signal pilote égal à la somme du signal détecté et de la valeur d'écart LØ si un temps supérieur au temps TMAX s'est écoulé depuis le début d'un pic détecté à l'étape b5, sans que la fin d'un pic ait été détectée à l'étape b6.1).

De préférence, l'opération b4) consiste à bloquer le signal pilote lorsque la pente du signal détecté est supérieure à la valeur de seuil (SØ).

Selon un autre aspect de l'invention, la valeur d'écart (LØ) et le temps choisi (TMAX) sont définissables par l'usager, le seuil de pente (SØ) étant défini comme le rapport d'une quantité préétablie au temps choisi.

En pratique, pour la plupart des applications, le procédé se complète d'une opération c) consistant à faire au moins un prélèvement d'effluent pendant un pic utile.

L'invention offre également un dispositif détecteur et/ou collecteur de fractions pour analyse d'effluents, qui comprend des moyens pour la mise en œuvre du procédé ci-dessus.

L'invention est exposée ci-après en détail à l'aide de la description détaillée qui va suivre, et des dessins annexés, sur lesquels :

la figure 1 illustre de manière schématique la structure générale d'une installation de chromatographie en phase liquide ;

la figure 2 illustre très schématiquement les éléments matériels électroniques destinés à être incorporés au détecteur ou au collecteur de fractions de la figure 1 ;

la figure 3 illustre l'organigramme de fonctionnement des moyens électroniques selon la présente invention ; et

les figures 4 à 6 illustrent différentes courbes de signal détecté et de signal pilote obtenus selon la présente invention.

La structure minimale d'une installation de chromatographie en phase liquide comprend un réservoir d'éluent, désigné par la référence 1, et suivi d'un dispositif de filtrage 2. Après cela, une ou plusieurs pompes 4 alimentent, le cas échéant à travers un dispositif de surveillance de pression 5, un injecteur 6 capable d'introduire l'éluent dans la colonne chromatographique 7. L'échantillon à analyser est injecté par exemple à l'aide d'une seringue soit au niveau de l'injecteur 6, soit plus directement en tête de colonne 7.

Les effluents arrivant en fonction du temps en sortie de colonne sont analysés par un ou plusieurs détecteurs 8. La plupart du temps, on associe à ce détecteur 8 un dispositif 10 d'enregistrement sur papier.

Comme précédemment indiqué, les détecteurs 8 détectent en fonction du temps, sous forme de signal électrique, une propriété physique et/ou chimique de l'effluent. Le signal électrique détecté est donc visualisé par l'enregistreur 10, et comporte d'une façon générale une ligne de base assortie de pics donc certains sont représentatifs d'informations utiles concernant l'effluent.

Dans de très nombreuses applications, on place à la suite du détecteur 8 un dispositif 9 dénommé collecteur de fractions, et muni d'un réseau de tubes récepteurs rangés. Il s'y trouve associé un dispositif de prélèvement capable de mettre dans un ordre préétabli les effluents successivement prélevés en sortie de colonne dans différents tubes.

L'analyse est donc finalement effectuée sur la base des informations délivrées par l'enregistreur 10, et le cas échéant des prélèvements effectués, et disponibles de manière rangée et reconnaissable dans le collecteur de fraction 9.

Il est devenu de plus en plus courant d'utiliser non pas un éluent pur, mais un éluent constitué d'un mélange, dont on va faire varier la concentration en cours de chromatographie. Cela est réalisé par un appareil nommé préparateur de gradient, illustré en 3, et commandant les pompes 4 qui sont dans ce cas en nombre au moins égal à 2, et associées à autant de dispositifs réservoir et filtre 1 et 2.

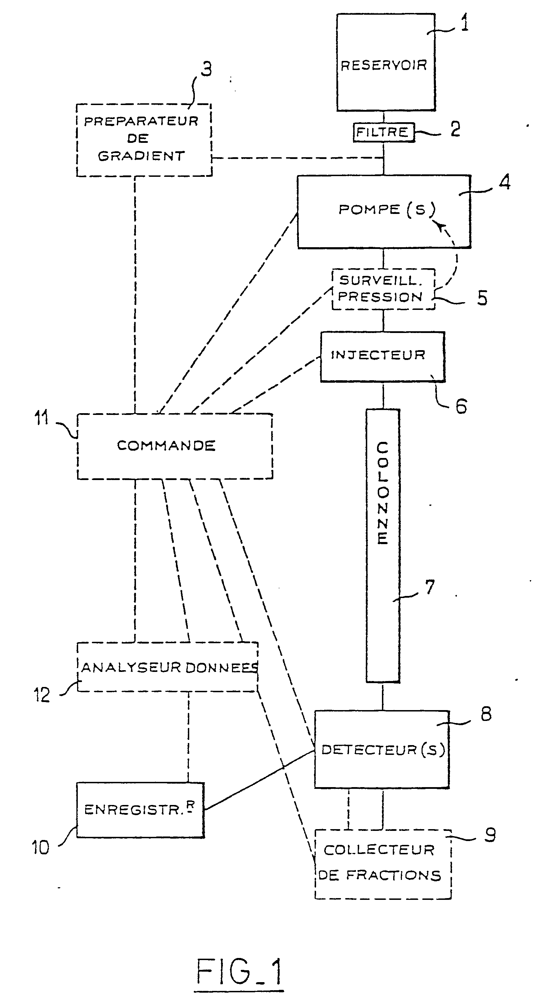

Enfin, l'installation se complète de nos jours d'un dispositif de commande générale, dispositif généralement de type électronique, et noté 11 sur la figure 1. Il s'y ajoute un analyseur de données 12, capable d'interagir avec l'enregistreur, et le collecteur de fractions 9.

En pratique, il est fréquent que l'analyseur de données 12 soit incorporé soit au détecteur soit au collecteur de fraction, l'enregistreur étant lui aussi généralement partie de l'un ou l'autre de ces dispositifs.

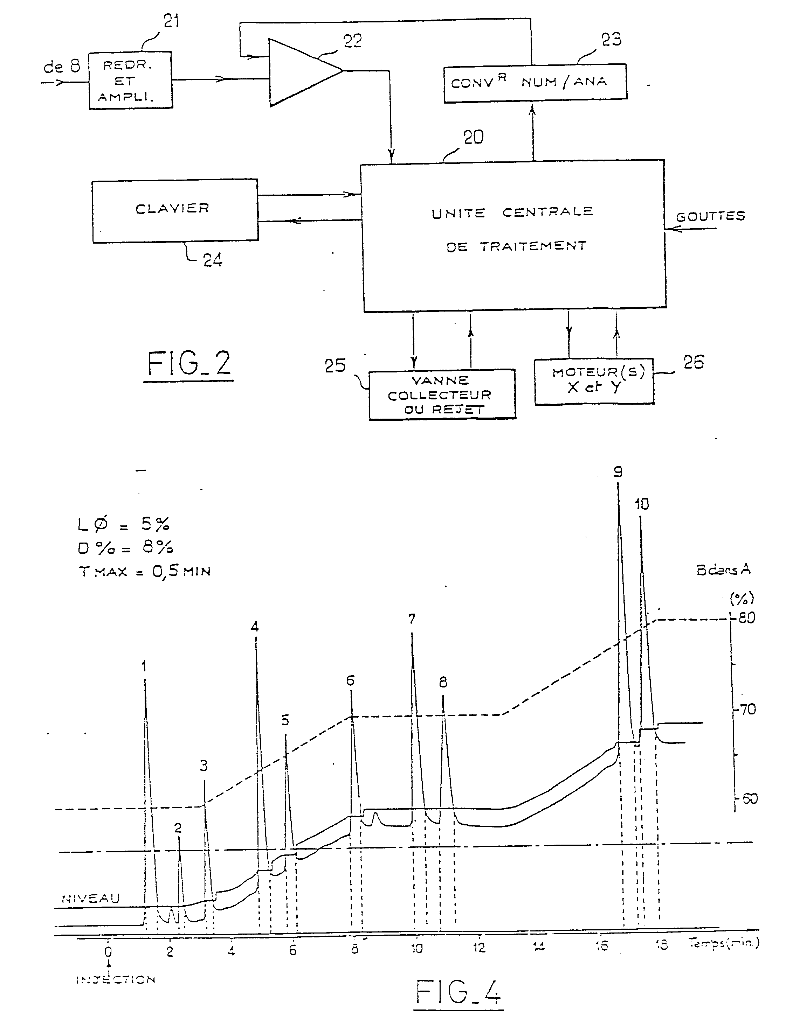

Le schéma général électrique d'un dispositif d'analyse convenant en chromatographie est donné sur la figure 2. On y reconnaît un dispositif de redressement et d'amplification 21, relié à la sortie du détecteur 8 de la figure 1. Le redressement est rendu nécessaire par le fait que certains types de détection fournissent des pics qui peuvent être aussi bien négatifs que positifs. La sortie du dispositif amplificateur-redresseur 21 est appliquée à un amplificateur-comparateur 22, dont la sortie va vers une unité centrale de traitement 20, qui peut regrouper les dispositifs 11 et 12 de la figure 1. Entre autre chose, cette unité centrale de traitement définit une échelle de conversion sous forme binaire, échelle de conversion qui est appliquée à un convertisseur numérique-analogique 23, lequel délivre alors en correspondance un signal analogique appliqué à l'autre entrée du comparateur 22. Lorsque le signal de sortie de l'amplificateur-redresseur 21 devient égal à la valeur binaire définie par l'unité centrale, celle-ci admet alors que cette valeur binaire représente numériquement la grandeur analogique disponible en sortie de l'amplificateur-redresseur 21, et la met en mémoire.

On prévoit également un dispositif de clavier 24, qui permet l'introduction de différentes données utiles dans l'unité centrale 20.

Enfin, l'unité centrale 20 reçoit des informations du collecteur de fractions 9, pour lui permettre de savoir par exemple si le nombre maximal de gouttes d'effluents admis dans un tube déterminé a été atteint. L'unité centrale 20 commande également par des interfaces 25 et 26 les dispositifs de vanne trois voies, ainsi que les moteurs de déplacement associés au collecteur de fraction. En effet, le collecteur de fractions va devoir déplacer une tête distributrice au-dessus de la rangée de tubes précitée, et commander de manière convenable cette tête de façon que l'effluent prélevé tombe effectivement dans le tube choisi, ou bien qu'il soit rejeté au rebut par la vanne trois voies.

Au lieu de définir le remplissage du collecteur de fractions par un nombre de gouttes, on peut naturellement limiter de façon préétablie le temps pendant lequel le prélèvement sera transféré dans un tube déterminé.

Le but est d'arriver à ce que chaque pic utile des effluents disponibles en sortie de la colonne de chromatographie aille dans un tube déterminé, ou dans plusieurs tubes si la durée du pic est trop longue pour se contenter d'un seul tube.

Des dispositions selon la présente invention sont mises en mémoire dans l'unité centrale 20, et servent au traitement du signal détecté, échantillonné sous forme numérique de la manière indiquée plus haut.

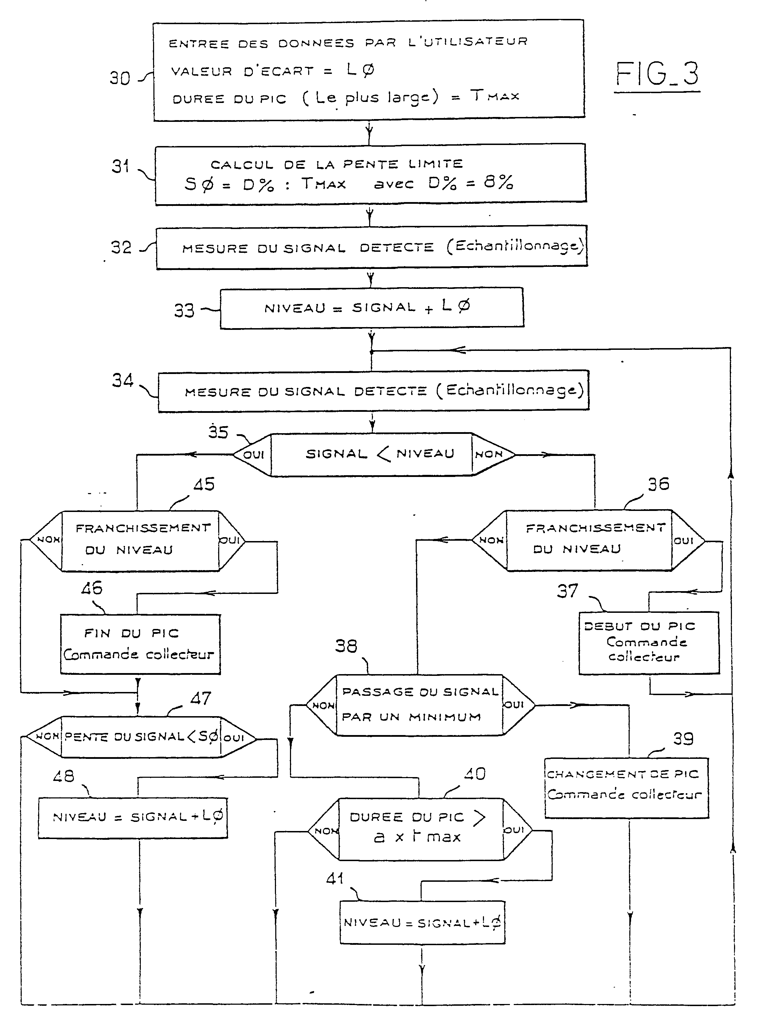

Les données mises en mémoire en question sont illustrées sous forme d'organigramme par la figure 3.

La première étape 30 de cette figure 3 consiste en l'introduction des données par l'utilisateur, à l'aide du clavier 24. Ces données comprennent au moins une valeur d'écart, notée LØ, et une durée de pic le plus large, notée TMAX.

On remarquera que le convertisseur numérique-analogique 23 de la figure 2 possède une pleine échelle. De façon interne, l'unité centrale de traitement 20 définit une hauteur limite, sous forme de pourcentage de la pleine échelle. Ce pourcentage est noté D % (8 % par exemple).

L'étape suivante 31 de la figure 3 consiste à déterminer le seuil de pente, à partir de cette valeur D %, ainsi que de la durée maximale TMAX introduite par l'usager. On note SØ le rapport de D % à TMAX.

L'étape suivante du fonctionnement de l'unité centrale de traitement 20 sur la figure 3 est l'étape 32, consistant à mesurer le signal détecté, de la manière précédemment décrite : l'unité centrale définit successivement des valeurs numériques croissantes qui sont converties sous forme analogique par le dispositif 23 et appliquées au comparateur 22. Au moment de l'égalité avec le signal d'entrée, on affecte à celui-ci une valeur numérique égale à celle qui a été présentée au dispositif 23 au moment de l'égalité.

Intervient alors l'étape 33, qui définit le fonctionnement courant de l'appareil, et est représenté par le fait qu'on définit un signal pilote, noté NIVEAU, et qui représente la valeur du signal détecté noté SIGNAL, augmentée de LØ.

L'étape 33 permet donc de définir la valeur initiale du signal pilote.

Après cela, l'étape 34 est inscrite dans le début d'une boucle, qui va définir la suite du fonctionnement. Cette étape 34 consiste en une nouvelle mesure du signal détecté, tout comme l'étape 32. L'étape suivante, notée 35, examine si le signal détecté est inférieur au niveau du signal pilote. Si elle lui est supérieure, l'étape 36 est un test qui détermine si cela constitue un franchissement du niveau du signal pilote qui viendrait d'être effectué. Si oui, l'étape 37 établit qu'il s'agit d'un début de pic, et on voit une commande correspondante au collecteur de fraction pour initier un prélèvement des effluents. On revient alors en 34.

Si l'étape 36 donnait une sortie non, c'est alors qu'on était en cours de pic. On examine au test 38 si le signal détecté passe par un minimum. Si oui, l'étape 39 établit un changement de pic, et commande en conséquence le collecteur de fraction pour passer à un nouveau tube.

Si non, la sortie de l'étape 38 va alors vers un test 40 qui examine si la durée du pic est égale à une fraction choisie de la durée TMAX définie par l'usager. Si cette condition de dépassement de durée n'est pas vérifiée, on retourne directement à l'étape 34. Si cette condition est au contraire vérifiée, l'étape 41 définit une mise à jour de la valeur du signal NIVEAU, pour établir maintenant celui-ci à la valeur courante du signal détecté, augmentée de LØ. On retourne alors à l'étape 34.

Il reste maintenant à examiner la sortie oui du test 35. Cette sortie indique que le signal détecté demeure inférieur au niveau du signal pilote. L'étape 45 examine si un franchissement du niveau a été effectué.

Si oui, il s'agit alors d'un retour en dessous du niveau, et l'étape 46 établit une fin de pic, tout en commandant en conséquence le collecteur de fraction pour arrêter le prélèvement.

Si la sortie du test 45 est non, c'est qu'on est resté en dessous du signal pilote, et hors d'un pic. Dans ce cas, on détecte au test 47 si la pente du signal détecté est inférieure au seuil de pente SØ. Si cette condition est réalisée, on continue à établir à l'étape 48 le signal pilote en fonction du signal détecté, et avec la même pente que celui-ci, par la relation :

$$NIVEAU = SIGNAL + LØ.$$

Et l'on revient à l'étape 34. Si au contraire le test 47 révèle que la pente du signal est supérieure au seuil SØ, c'est alors la sortie non du test 47 qui est prise, et le signal NIVEAU reste à sa valeur précédente, après quoi on retourne à l'étape 34.

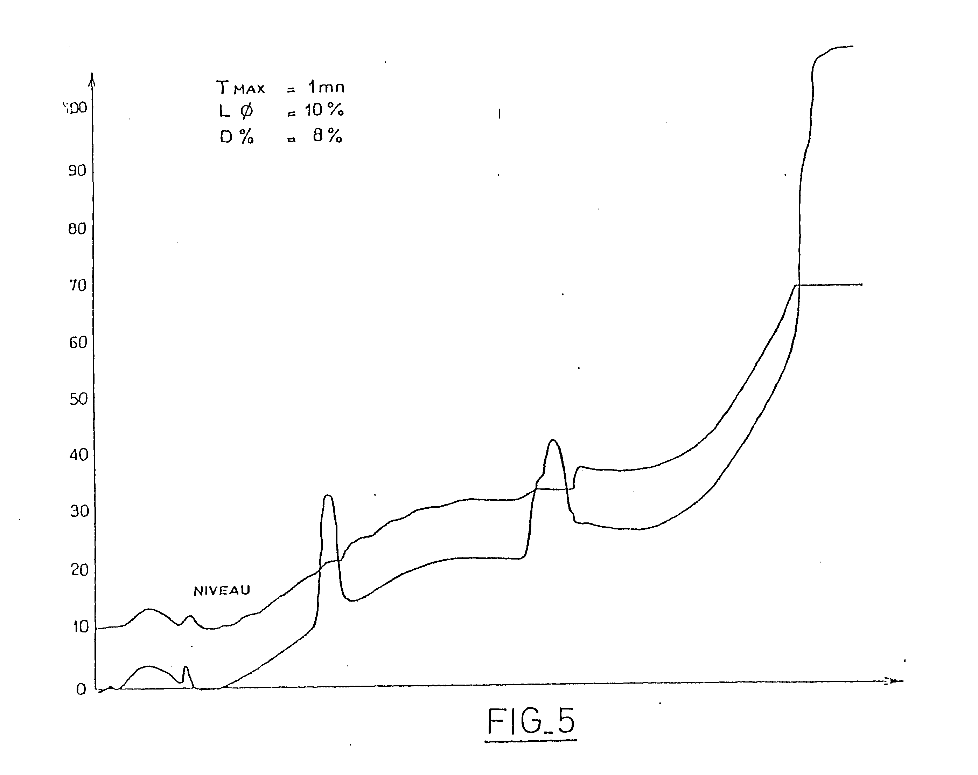

On se référera maintenant à la figure 4 qui permet de mieux comprendre la présente invention. Sur cette figure, les abscisses représentent un axe des temps, repérés en minutes, et les ordonnées représentent un paramètre de détection. Il s'agit d'une chromatographie en phase liquide effectuée avec un gradient d'élution, la courbe de ce gradient étant donnée en trait tireté long, en référence à l'axe des ordonnées qui apparaît en partie droite de la figure 4. On voit que le pourcentage était au départ de 60 % de B dans A, pour monter en ligne droite jusqu'à un nouveau palier à 70 %, puis monter à nouveau en ligne droite jusqu'à un ultime palier à 80 %.

L'injection d'échantillon a été faite à l'instant 0, et bien entendu aucun pic significatif n'a été observé pendant un temps bref consécutif à cette injection. Au même moment, la valeur du signal pilote NIVEAU a été fixée un peu au dessus du niveau de la ligne de base du signal détecté, qui est illustré en trait plein léger tandis que le signal NIVEAU est illustré en trait plus fort.

Au début, on passe par les étapes 35, 45, 47 et 48 de la figure 3. Cependant, comme le signal détecté est constant, le signal NIVEAU reste constant lui aussi.

Un premier pic brutal apparaît. A ce moment, on va maintenant passer par les étapes 35, 36 et 37, et le collecteur de fraction est mis en fonctionnement (sauf programmation spéciale des pics, comme on le verra plus loin).

Pour l'échantillon suivant du signal numérique détecté, on passera par les étapes 35, 36, 38 et 40 sorties non. Le signal NIVEAU reste donc de valeur constante, et l'on reste dans le premier pic. Cela va durer jusqu'à ce que la valeur du signal détecté redevienne inférieure au signal pilote NIVEAU. A ce moment, on passe par les étapes 35, 45 et 46, ce qui représente une fin de pic.

Après le pic 1, le signal NIVEAU reste à sa valeur constante, étant donné qu'il n'y a pas une différence supérieure à LØ entre la valeur du signal détecté et la valeur de ce signal pilote. Un pic très bref se trouve escamoté par le fait qu'il reste inférieur au signal pilote NIVEAU.

Après cela, on trouve un second pic, numéroté 2. Pour ce second pic, les choses se passent comme pour le premier. Après le second pic, on voit que la valeur du signal pilote NIVEAU va monter légèrement, pour suivre un début de montée de la ligne de base.

Cette montée va se trouver interrompue au moment où apparaît un troisième pic, pendant lequel la valeur du signal NIVEAU reste encore une fois constante.

Après ce troisième pic, on rétablit à nouveau la valeur du signal pilote d'après la relation précitée :

$$NIVEAU = SIGNAL + LØ.$$

On note que le signal NIVEAU continue à monter, en suivant la pente de la ligne de base.

On va continuer de la sorte, en détectant le quatrième pic, puis le cinquième, puis le sixième. Après le sixième pic, la ligne de base cesse son ascension. On remarquera que le signal NIVEAU va conserver un parallélisme approximatif avec celle-ci, c'est-à-dire approximativement avoir la même pente que la ligne de base. Après le sixième pic, un pic d'artefact est là encore escamoté.

On trouve ensuite un septième, suivi d'un huitième pic, tous deux correctement détectés.

Pendant la montée ultérieure du niveau de la ligne de base, le signal NIVEAU va encore suivre celle-ci, pour détecter finalement les neuvième et dixième pics, après quoi plus aucun pic significatif n'apparaît.

On remarquera que les moyens de la présente invention fonctionnent remarquablement bien, en suivant de très près l'évolution de la ligne de base. Les artefacts sont convenablement escamotés, tandis que tous les pics utiles sont détectés.

Naturellement, il est possible en pratique à l'opérateur, qui connaît par exemple déjà certains des constituants, et ne désire en isoler que d'autres, de sélectionner par exemple les pics qu'il veut voir faire l'objet d'un prélèvement au niveau du collecteur de fraction. Cela s'effectue à l'aide du clavier 24. De la sorte, on pourra par exemple sélectionner seulement les pics 1, 3, 5, 7 et 9.

La ligne horizontale en trait d'axe se représente à un niveau constant qui aurait pu être utilisé selon la technique antérieure pour une chromatographie du type illustré sur la figure 4. Cette ligne à niveau constant aura isolé correctement le pic 1, tout juste perçu le pic 2, et isolé correctement les pics 3, 4 et 5. Par contre, après cela, le collecteur de fraction aura été excité en permanence, et aurait prélevé une quantité importante d'effluent parfaitement inutile, dans lequel se trouveraient noyés certains tubes correspondant aux pics 6, 7, 8, 9 et 10. Il est clair que ce type de fonctionnement est tout à fait inconfortable pour l'utilisateur.

La figure 5 illustre un autre type de chromatographie réalisé avec les moyens de la présente invention, et avec des réglages un peu différents. Le déroulement des opérations n'est pas fondamentalement distinct de celui de la figure 4, et la figure 5 ne sera pas décrite spécialement. On remarquera simplement que le dispositif selon l'invention permet de repérer avec une bonne exactitude des pics qui ne sont pas nécessairement très pointus.

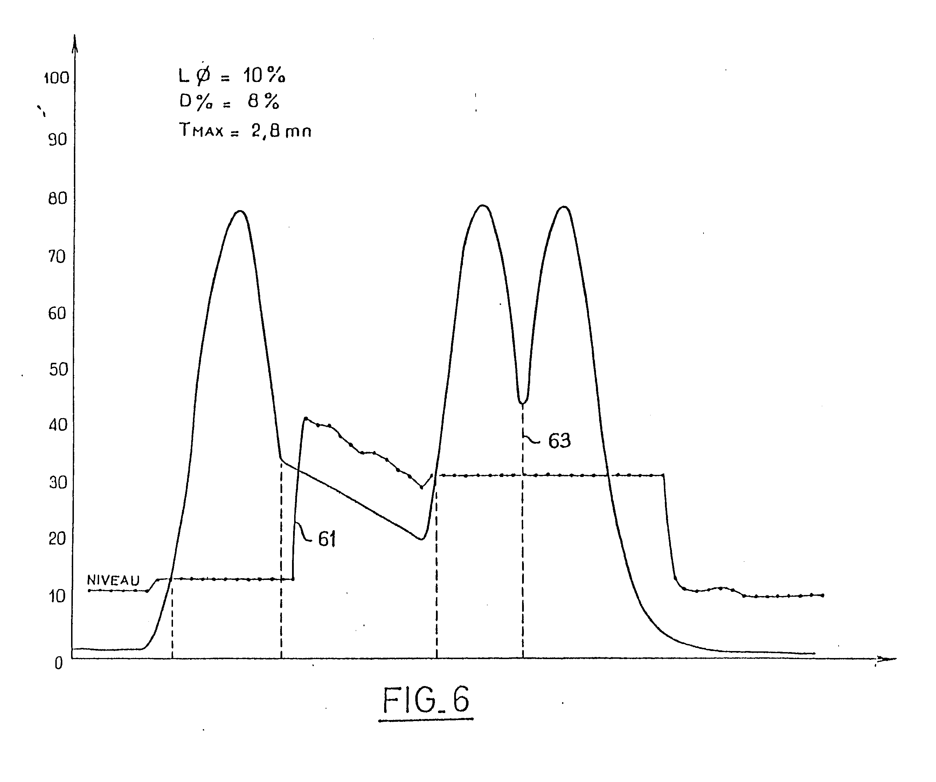

On se référera maintenant à la figure 6 qui illustre une autre application du procédé de l'invention.

Sur cette figure, les largeurs de pics sont également très importantes, et l'on observera dès maintenant qu'elles sont supérieures à la valeur limite de durée de pic qui intervient à l'étape 40 de la figure 3.

Au début, le signal NIVEAU s'établit donc à la valeur du signal détecté + LØ. Cette valeur monte légèrement au début du premier pic, pour rester constante tout pendant ce premier pic, qui est détecté de la même manière que précédemment. Cependant, lorsque l'étape 40 indique que la durée du pic a dépassé la valeur maximum, on passe alors à l'étape 41, qui fixe autoritairement le signal NIVEAU à la valeur du signal détecté augmentée de LØ. C'est la raison pour laquelle on observe une montée brutale du signal NIVEAU, indiqué en 61 sur la figure 6.

Après cela, le signal NIVEAU suit de façon quasi parallèle (compte tenu de sa numérisation) l'évolution de la ligne de base. Un nouveau pic est détecté un peu plus tard, pendant lequel le signal NIVEAU demeure à une valeur constante. En 63, l'étape 38 détecte un minimum dans le signal détecté. Cette détection s'effectue de manière connue en elle-même. On enregistre alors un changement de pic, au niveau de l'étape 39, et le collecteur de fraction passe sur un autre tube. Lorsqu'après ce troisième pic le signal possède une pente inférieure au seuil, la valeur du signal pilote redescend alors, avec un léger retard, d'après l'étape 48, qui fixe à nouveau le signal NIVEAU à la valeur du signal détecté augmentée de LØ.

Les exemples qui viennent d'être donnés montrent que le procédé de la présente invention permet un fonctionnement très efficace dans l'analyse d'éluents et le prélèvement de ceux-ci par un collecteur de fractions, et ceci dans de nombreux cas de figures, où l'allure de la ligne de base du signal détecté varie dans des proportions importantes.

La présente invention couvre non seulement le procédé qui vient d'être décrit, mais aussi les moyens pour sa mise en œuvre, qui peuvent être incorporés à tout dispositif d'analyse d'effluents, en particulier à des détecteurs, et/ou à des collecteurs de fractions qui peuvent servir dans des installations de chromatographie en phase liquide, ou dans d'autres types d'installations comparables.

On peut aussi définir le seuil de pente (au clavier) autrement que par une quantité préétablie (D%) et la valeur TMAX introduite par l'opérateur.

## Revendications

1. Procédé d'analyse d'effluents, dans lequel :

a) on détecte en fonction du temps, sous forme de signal électrique, une propriété physique et/ou chimique de l'effluent, le signal électrique détecté comportant une ligne de base assortie de pics dont certains sont représentatifs d'informations utiles concernant l'effluent ;

b) on analyse le signal détecté, en particulier d'après sa pente, en vue d'y sélectionner des pics utiles ; l'étape d'analyse b) comprenant les opérations suivantes :

b1) définir (30, 31) une valeur d'écart (LØ), un seuil de pente (SØ) et un temps TMAX correspondant à la durée du pic le plus large à déceler,

b2) comparer (47) la pente du signal détecté, à la valeur de seuil (SØ) ;

b3) faire évoluer (47, 48) un signal pilote (NIVEAU) à partir d'une valeur égale au signal détecté, augmentée de la valeur d'écart (LØ), tant que la pente du signal détecté est inférieure au seuil de pente ;

b4) limiter (47) l'évolution du signal pilote lorsque la pente du signal détecté est supérieure au seuil de pente ;

b5) retenir (37) comme un pic utile les valeurs consécutives du signal détecté qui dépassent le niveau du signal pilote (35, 36) ;

b6) après la détection d'un début de pic à l'étape b5) :

b6.1) déceler (35, 45) le passage du signal détecté en dessous du signal pilote ce qui correspond à la fin d'un pic utile (46) et conduit à réitérer les étapes b2 à b6 ou déceler (38) le passage du signal détecté par un minimum, ce qui correspond à la fin du pic détecté et au début du pic suivant (39) et conduit à réitérer les étapes b5 et b6 et simultanément,

b6.2) comparer (40) le temps écoulé depuis le début d'un pic au temps TMAX pour redéfinir (41) un signal pilote égal à la somme du signal détecté et de la valeur d'écart (LØ) si un temps supérieur au temps TMAX s'est écoulé depuis le début d'un pic détecté à l'étape b5, sans que la fin d'un pic ait été détectée à l'étape b.6.1).

2. Procédé selon la revendication 1, caractérisé par le fait que l'opération b4) consiste à bloquer le signal pilote lorsque la pente du signal détecté est supérieure à la valeur de seuil (SØ).

3. Procédé selon l'une des revendications 1 et 2, caractérisé par le fait que la valeur d'écart (LØ) et le temps choisi (TMAX) sont définissables (30) par l'usager, le seuil de pente (SØ) étant défini (31) comme le rapport d'une quantité préétablie au temps choisi.

4. Procédé selon l'une des revendications 1 à 3, caractérisé par le fait que le signal détecté est converti (32, 34) sous forme numérique.

5. Procédé selon l'une des revendications 1 à 4, caractérisé par le fait qu'il comporte, en outre, l'opération c) consistant à faire au moins un prélèvement d'effluent pendant un pic utile.

6. Procédé selon l'une des revendications 1 à 5, caractérisé par le fait que l'effluent est le liquide sortant d'une colonne de chromatographie en phase liquide.

7. Procédé selon la revendication 6, caractérisé par le fait que la colonne est alimentée avec un gradient d'élution.

8. Dispositif détecteur et/ou collecteur de fractions pour analyse d'effluents, caractérisé par le fait qu'il comprend des moyens pour la mise en œuvre du procédé selon l'une des revendications 1 à 7.

## Claims

1. Process for the analysis of effluents, in which :

a) a physical and/or chemical property of the effluent is detected as a function of time, in the form of an electrical signal, the detected electrical signal comprising a baseline presenting peaks some of which represent useful information concerning the effluent ;

b) the detected signal is analysed, in particular according to its gradient, with a view to choosing useful peaks therefrom ; the analysis step b) comprising the following operations :

b1) defining (30, 31) a deviation value (LØ), a threshold gradient (SØ) and a time TMAX corresponding to the duration of the widest peak to be tested for,

b2) comparing (47) the gradient of the detected signal with the threshold value (SØ) ;

b3) developing (47, 48) a pilot signal (LEVEL) from a value equal to the detected signal, augmented by the deviation value (LØ) so long as the gradient of the detected signal is lower than the threshold gradient ;

b4) limiting (47) the development of the pilot signal when the gradient of the detected signal is higher than the threshold gradient ;

b5) retaining (37) as a useful peak the consecutive values of the detected signal which exceed the level of the pilot signal (35, 36) ;

b6) after the detection of the beginning of a peak in step b5) :

b6.1) testing (35, 45) for the passage of the signal detected below the pilot signal, which corresponds to the end of a useful peak (46) and leads to the reiteration of the steps b2 to b6 or testing (38) for the passage of the signal detected by a minimum, which corresponds to the end of the detected peak and to the beginning of the following peak (39) and leads to reiteration of the steps b5 and b6 and simultaneously,

b6.2) comparing (40) the time elapsed since the beginning of a peak to the time TMAX in order to redefine (41) a pilot signal equal to the sum of the detected signal and of deviation value (LØ) if a time longer than the time TMAX has elapsed since the beginning of a peak detected in step b5, without the end of a peak having been detected in step b.6.1).

2. Process according to Claim 1, characterized in that the operation b4) consists in blocking the pilot signal when the gradient of the detected signal is higher than the threshold value (SØ).

3. Process according to either of Claims 1 and 2, characterized in that the deviation value (LØ) and the chosen time (TMAX) can be defined (30) by the user, the threshold gradient (SØ) being defined (31) as the ratio of a pre-determined quantity to the chosen time.

4. Process according to one of Claims 1 to 3, characterized in that the detected signal is converted (32, 34) into digital form.

5. Process according to one of Claims 1 to 4, characterized in that it additionally comprises the operation c) consisting in performing at least one sampling of effluent during a useful peak.

6. Process according to one of Claims 1 to 5, characterized in that the effluent is the liquid flowing out of a liquid phase chromatography column.

7. Process according to Claim 6, characterized in that the column is fed with an elution gradient.

8. Fraction detector and/or collector device for the analysis of effluents, characterized in that it comprises means for implementing the process according to one of Claims 1 to 7.

**Patentansprüche**

1. Verfahren zur Analyse von Ausströmungen, bei dem :

a) als Funktion der Zeit in der Form eines elektrischen Signales eine physikalische und/oder chemische Eigenschaft der Ausströmung erfaßt wird, wobei das erfaßte elektrische Signal eine Grundlinie aufweist, die mit Spitzen versehen ist, von denen gewisse Nutzinformationen betreffend die Ausströmung darstellen,

b) das erfaßte Signal, insbesondere gemäß seiner Neigung analysiert wird, um daraus Nutzspitzen zu selektionieren, wobei der Analysenschritt b) die folgenden Operationen aufweist :

b1) Bestimmen (30, 31) eines Bereichswertes (LØ), eines Schwellenwertes der Neigung (SØ) und einer Zeit TMAX entsprechend der Zeitdauer des größten nachzuweisenden Spitzenwertes,

b2) Vergleichen (47) der Neigung des erfaßten Signales mit dem Schwellenwert (SØ),

b3) Entwickeln (47, 48) eines Steuersignales (NIVEAU) ausgehend von einem Wert gleich dem erfaßten Signal, erhöht um den Bereichswert (LØ), solange die Neigung des erfaßten Signales kleiner als der Schwellenwert der Neigung ist,

b4) Begrenzen (47) der Entwicklung des Steuersignales, wenn die Neigung des erfaßten Signales größer als der Schwellenwert der Neigung ist,

b5) Zurückhalten (37) der folgenden Werte des erfaßten Signales, die das Niveau des Steuersignales (35, 36) überschreiten, als Nutzspitze,

b6) Nach Erfassung des Anfangs der Spitze im Verfahrensschritt b5) :

b6.1) Feststellen (35, 45) des Durchganges des erfaßten Signales unter dem Steuersignal, was dem Ende einer Nutzspitze (46) entspricht und dazu führt, die Verfahrensschritte b2 bis b6 zu wiederholen, oder Feststellen (38) des Durchganges des erfaßten Signales durch ein Minimum, was dem Ende der erfaßten Spitze und dem Anfang der folgenden Spitze (39) entspricht und dazu führt, die Verfahrensschritte b5 und b6 zu wiederholen, und gleichzeitig.

b6.2) Vergleichen (40) der seit dem Beginn einer Spitze zur Zeit TMAX abgelaufenen Zeit, um ein Steuersignal gleich der Summe des erfaßten Signales und dem Bereichswert (LØ) erneut festzulegen (41), wenn eine Zeit über der Zeit TMAX seit dem Beginn einer erfaßten Spitze im Verfahrensschritt b5 abgelaufen ist, ohne daß das Ende einer Spitze im Verfahrensschritt b6.1) erfaßt wurde.

2. Verfahren nach Anspruch 1, dadurch gekennzeichnet, daß die Operation b4) in einem Sperren des Steuersignales besteht, wenn die Neigung des erfaßten Signales über dem Schwellenwert (SØ) liegt.

3. Verfahren nach einem der Ansprüche 1 und 2, dadurch gekennzeichnet, daß der Bereichswert (LØ) und die gewählte Zeit (TMAX) durch den Benutzer festlegbar sind (30), wobei der Schwellenwert (SØ) der Neigung wie das Verhältnis bzw. die Beziehung einer voreingestellten Größe zur gewählten Zeit festlegbar ist (31).

4. Verfahren nach einem der Ansprüche 1 bis 3, dadurch gekennzeichnet, daß das erfaßte Signal digital umgewandelt wird (32, 34).

5. Verfahren nach einem der Ansprüche 1 bis 4, dadurch gekennzeichnet, daß zusätzlich eine Operation c) vorgesehen ist, die darin besteht, mindestens eine Entnahme der Ausströmung während einer Nutzspitze vorzunehmen.

6. Verfahren nach einem der Ansprüche 1 bis 5, dadurch gekennzeichnet, daß die Ausströmung die eine Chromatographiekolonne in flüssiger Phase verlassende Flüssigkeit ist.

7. Verfahren nach Anspruch 6, dadurch gekennzeichnet, daß die Kolonne mit einem Eluierungsgradienten versehen wird.

8. Detektor- und/oder Sammler für Fraktionen zur Analyse von Ausströmungen, gekennzeichnet durch Mittel zur Durchführung des Verfahrens nach einem der Ansprüche 1 bis 7.

FIG_1

0 110 927

FIG_2

LØ = 5%
D% = 8%
T MAX = 0,5 MIN

FIG_4

2

FIG_3

30 — ENTREE DES DONNEES PAR L'UTILISATEUR
VALEUR D'ECART = L$\emptyset$
DUREE DU PIC ( Le plus large) = $T_{MAX}$

31 — CALCUL DE LA PENTE LIMITE
$S\emptyset = D\% : T_{MAX}$ avec $D\% = 8\%$

32 — MESURE DU SIGNAL DETECTE (Echantillonnage)

33 — NIVEAU = SIGNAL + L$\emptyset$

34 — MESURE DU SIGNAL DETECTE (Echantillonnage)

35 — SIGNAL < NIVEAU — OUI / NON

45 — FRANCHISSEMENT DU NIVEAU — NON / OUI

36 — FRANCHISSEMENT DU NIVEAU — NON / OUI

46 — FIN DU PIC Commande collecteur

37 — DEBUT DU PIC Commande collecteur

38 — PASSAGE DU SIGNAL PAR UN MINIMUM — NON / OUI

47 — PENTE DU SIGNAL < $S\emptyset$ — NON / OUI

39 — CHANGEMENT DE PIC Commande collecteur

48 — NIVEAU = SIGNAL + L$\emptyset$

40 — DUREE DU PIC > $a \times T_{max}$ — NON / OUI

41 — NIVEAU = SIGNAL + L$\emptyset$

FIG_5

0 110 927

L ∅ = 10 %
D % = 8 %
$T_{MAX}$ = 2,8 mn

NIVEAU

61

63

FIG. 6

0 110 927